# EUROPEAN PATENT APPLICATION

(11) **EP 3 276 500 A1**
(43) Date of publication of application: **31.01.2018**
(21) Application number: 15886473.6
(22) Date of filing: 30.10.2015
(51) Int. Cl.: G06F 17/30, G06F 3/0481, G06F 3/0483

(54) **BROWSING ASSISTANCE METHOD FOR ELECTRONIC BOOK, AND BROWSING ASSISTANCE PROGRAM**

(30) Priority: 26.03.2015 JP 2015064733
(71) Applicant: Misumi Group Inc., Tokyo 112-8583 (JP)
(72) Inventor: TANIGUCHI, Koichi, Tokyo 112-8583 (JP)
(74) Representative: Schön, Christoph
(86) International application number: PCT/JP2015/080736
(87) International publication number: WO 2016/151921

(57) **Abstract**

A sticky note fixation button display unit (12) displays a sticky note fixation button (81) for switching a sticky note (80) between an attachment position fixed state, in which an attachment position is unchangeable, and an attachment position variable state, in which the attachment position is changeable. A sticky note status switching unit (13) switches the sticky note (80) between the attachment position fixed state and the attachment position variable state according to an operation of contact of a pointer F with the sticky note fixation button (81). An attachment position setting unit (14) changes the attachment position of the sticky note (80) according to a displacement of the pointer F when the sticky note (80) is in the attachment position variable state and keeps the attachment position of the sticky note (80) fixed without changing when the sticky note (80) is in the attachment position fixed state.

## Description

### Technical Field

The present invention relates to a method and a program for assisting in electronic book browsing using a touch panel display device.

### Background Art

To facilitate electronic book browsing using a touch panel device (a device comprising a touch panel display unit, such as a tablet terminal, a smart phone, or a personal computer), configurations have been proposed in which the work of writing a memo on a sticky note and attaching the sticky note to a point of attention can be performed with an operation of touch on a browsing screen for an electronic book, as in the case of paper book browsing (see, for example, Patent Literatures 1 and 2).

Patent Literature 1 describes a configuration which executes an application set for a parent sticky note of two sticky notes (the parent sticky note and a child sticky note) displayed at overlapping positions on a browsing screen, using data set for the child sticky note as input data.

Patent Literature 2 describes a configuration which arranges a sticky note created by a user at a position where the sticky note does not overlap with other already-created sticky notes such that the sticky notes are aligned, on a browsing screen having a plurality of pages of an electronic book displayed on top of each other.

### Citation List

### Patent Literature

Patent Literature 1: Japanese Patent Laid-Open No. 2011-13743
Patent Literature 2: Japanese Patent Laid-Open No. 2011-43895

### Summary of Invention

### Technical Problem

When a sticky-note-based marking function is to be provided at the time of browsing an electronic book using a touch panel device, as in the configurations described in Patent Literatures 1 and 2, it is desirable that usability equivalent to usability when a sticky note is attached at the time of paper book browsing be achieved.

The present invention has been made in view of the above-described background, and has its object to provide a browsing assistance method for an electronic book and a browsing assistance program for an electronic book capable of improving the usability of a sticky-note-based marking function at the time of browsing an electronic book using a touch panel device.

### Solution to Problem

The present invention has been made to attain the above-described object. A browsing assistance method for an electronic book according to the present invention is a method for assisting in electronic book browsing using a touch panel device comprising a touch panel display unit, a position-of-contact sensing unit which senses a position of contact of a pointer with the touch panel display unit, and a control unit which changes a display on the touch panel display unit in accordance with the position of contact of the pointer sensed by the position-of-contact sensing unit, comprising
a sticky note creation step of causing the control unit to display a sticky note on the touch panel display unit when contact of the pointer with the touch panel display unit, giving an instruction for sticky note creation, is sensed by the position-of-contact sensing unit in a state in which an electronic book browsing screen is displayed on the touch panel display unit,
a sticky note fixation button display step of causing the control unit to display on the touch panel display unit a sticky note fixation button for switching the sticky note between an attachment position fixed state in which an attachment position is unchangeable and an attachment position variable state in which the attachment position is changeable, when the sticky note is displayed on the touch panel display unit,
a sticky note status switching step of causing the control unit to switch the sticky note to the attachment position variable state when contact of the pointer with the sticky note fixation button is sensed by the position-of-contact sensing unit when the sticky note is in the attachment position fixed state, and switching the sticky note to the attachment position fixed state when contact of the pointer with the sticky note fixation button is sensed when the sticky note is in the attachment position variable state, and
an attachment position setting step of causing the control unit to change the attachment position of the sticky note in accordance with a displacement of the pointer in contact with the sticky note when the sticky note is in the attachment position variable state, and fixing the attachment position of the sticky note without change when the sticky note is in the attachment position fixed state, when the displacement is sensed by the position-of-contact sensing unit.

According to the present invention, when a user (a browser of an electronic book) brings the pointer (e.g., a finger of the user or a touch pen) into contact with the touch panel display unit to give an instruction for sticky note creation, the control unit displays a sticky note on the touch panel display unit by the sticky note creation step and displays the sticky note fixation button on the touch panel display unit by the sticky note fixation button display step.

When the user brings the pointer into contact with the sticky note fixation button, the control unit switches the sticky note between the attachment position fixed state and the attachment position variable state by the sticky note status switching step. The control unit changes an attachment position of the sticky note in accordance with a displacement of the pointer in contact with the sticky note when the sticky note is in the attachment position variable state and keeps the attachment position of the sticky note fixed without change even in the event of a displacement of the pointer in contact with the sticky note when the sticky note is in the attachment position fixed state.

For this reason, the user can perform a sticky note reattachment operation by displaying a sticky note on the touch panel display unit through an operation of contact of the pointer and then bringing the pointer into contact with the sticky note fixation button to put the sticky note into the attachment position variable state, as in the case of paper book browsing. The user can also attach and fix a sticky note to a point of attention by bringing the pointer into contact with the sticky note fixation button to put the sticky note into the attachment position fixed state, as in the case of paper book browsing. As described above, reattachment and attachment (fixation) operations similar to those in the case of paper book browsing can be performed on a sticky note displayed on the touch panel device. This allows improvement of the usability of a sticky-note-based marking function at the time of browsing an electronic book using the touch panel device.

A browsing assistance program for an electronic book according to the present invention is a browsing assistance program for an electronic book, in a touch panel device comprising a touch panel display unit, a position-of-contact sensing unit which senses a position of contact of a pointer with the touch panel display unit, and a control unit which changes a display on the touch panel display unit in accordance with the position of contact of the pointer sensed by the position-of-contact sensing unit, the browsing assistance program being executed by the control unit,
wherein the program causes the control unit to function as
a sticky note creation unit which displays a sticky note on the touch panel display unit when contact of the pointer with the touch panel display unit, giving an instruction for sticky note creation, is sensed by the position-of-contact sensing unit in a state an electronic book browsing screen is displayed on the touch panel display unit,
a sticky note fixation button display unit which displays on the touch panel display unit a sticky note fixation button for switching the sticky note between an attachment position fixed state in which an attachment position is unchangeable and an attachment position variable state in which the attachment position is changeable, when the sticky note is displayed on the touch panel display unit,
a sticky note status switching unit which switches the sticky note to the attachment position variable state when contact of the pointer with the sticky note fixation button is sensed by the position-of-contact sensing unit when the sticky note is in the attachment position fixed state, and switches the sticky note to the attachment position fixed state when contact of the pointer with the sticky note fixation button is sensed when the sticky note is in the attachment position variable state, and
an attachment position setting unit which changes the attachment position of the sticky note in accordance with a displacement of the pointer in contact with the sticky note when the sticky note is in the attachment position variable state and fixes the attachment position of the sticky note fixed without change when the sticky note is in the attachment position fixed state, when the displacement is sensed by the position-of-contact sensing unit.

A configuration which performs the above-described browsing assistance method for an electronic book according to the present invention is implemented by causing the control unit to execute the browsing assistance program for an electronic book according to the present invention. This allows improvement of the usability of the sticky-note-based marking function at the time of browsing an electronic book using the touch panel device.

In the browsing assistance program for an electronic book according to the present invention,
when the sticky note is in the attachment position fixed state when a displacement of the pointer in contact with the sticky note is sensed by the position-of-contact sensing unit, the attachment position setting unit fixes the attachment position of the sticky note by changing a position of the sticky note in accordance with the displacement, and thereafter returning the sticky note to the position before the change when separation of the pointer from the sticky note is sensed by the position-of-contact sensing unit after the change.

According to the present invention, the user can check a display on a portion hidden behind the sticky note by temporarily shifting the sticky note in the attachment position fixed state.

In the browsing assistance program for an electronic book according to the present invention,
the sticky note fixation button display unit makes a display of the sticky note fixation button when the sticky note is in the attachment position fixed state in a manner different from a display of the sticky note fixation button when the sticky note is in the attachment position variable state.

According to the present invention, the user can easily recognize whether a sticky note displayed on the touch panel display unit is in the attachment position variable state or the attachment position fixed state by visually recognizing a display mode of the sticky note fixation button.

In the browsing assistance program for an electronic book according to the present invention,
the sticky note creation unit displays a sticky note of a first size when the contact of the pointer, giving the instruction for sticky note creation, is sensed by the position-of-contact sensing unit, performs a process of writing a comment on the sticky note of the first size in accordance with contact of the pointer with the sticky note of the first size, and scales down the sticky note of the first size to a second size when contact of the pointer, giving an instruction for writing completion, is sensed by the position-of-contact sensing unit,
the sticky note status switching unit switches the sticky note of the second size between the attachment position fixed state and the attachment position variable state, and
the attachment position setting unit performs a process of changing the attachment position and fixing the attachment position of the sticky note of the second size as a target.

According to the present invention, the user can easily perform an operation of writing a comment on the sticky note of the first size and perform sticky-note-based marking while reducing an area, by which a displayed portion of an electronic book is hidden, using the sticky note of the second size scaled down from the first size after the writing.

In the browsing assistance program for an electronic book according to the present invention,
the sticky note creation unit displays a new sticky note on the touch panel display unit every time the contact of the pointer, giving the instruction for sticky note creation, is sensed by the position-of-contact sensing unit, and
the control unit comprises a stacking order change unit which, when contact of the pointer with a sticky note displayed at a forefront among a plurality of sticky notes displayed on top of each other on the touch panel display unit is sensed by the position-of-contact sensing unit, performs a stacking order change process of displaying, at a rearmost, the sticky note displayed at the forefront and displaying, at the forefront, a sticky note displayed next behind the forefront among the plurality of sticky notes.

According to the present invention, when a plurality of sticky notes are displayed on top of each other on the touch panel display unit, and a character or the like entered in a sticky note on a back side cannot be visually recognized, the user can execute the stacking order change process by bringing the pointer into contact with a sticky note displayed at the front. This allows the user to rearrange the sticky note hidden behind at the front and visually recognize the character or the like entered.

### Brief Description of Drawings

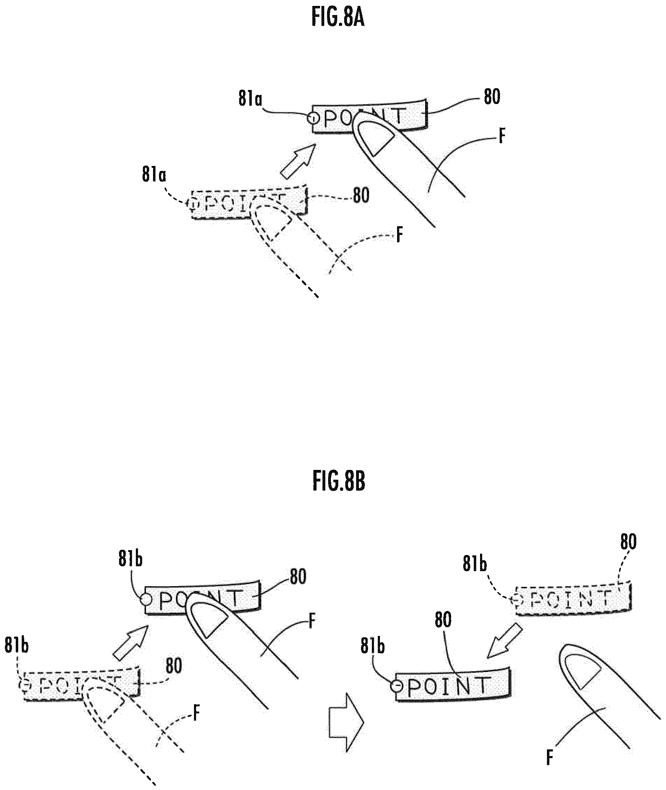

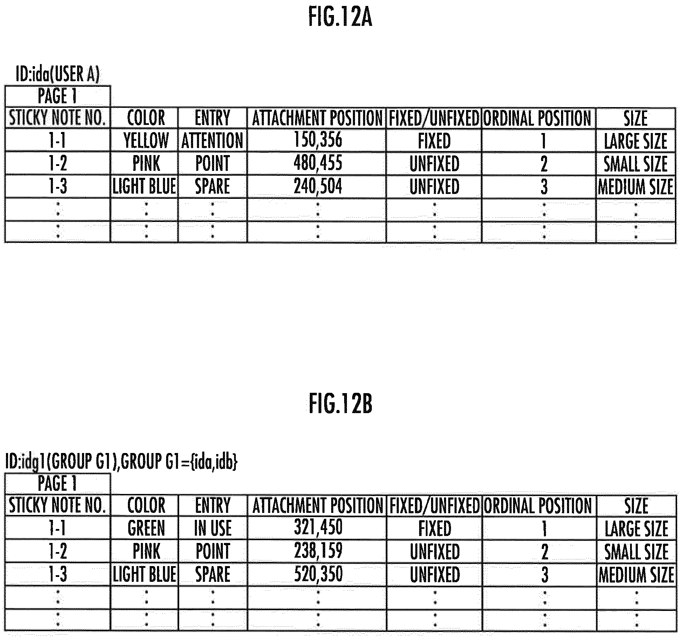

FIG. 1 is a view for explaining the outer appearance of a touch panel device in which a browsing assistance method for an electronic book and a browsing assistance program for an electronic book according to the present invention are executed.
FIG. 2 is a diagram of the configuration of the touch panel device shown in FIG. 1.
FIG. 3 is a flowchart of a sticky note creation process.
FIG. 4 is a flowchart of a sticky note attachment position setting process.
FIG. 5 is a view for explaining an operation of giving an instruction for sticky note creation.
FIG. 6 is a view for explaining an operation of writing a comment on a sticky note.
FIG. 7 is a view for explaining an operation of giving an instruction to complete sticky note creation.
FIG.s 8A and 8B are each a view for explaining an operation of giving an instruction for position change to the sticky note, FIG. 8A shows an operation on the sticky note in an attachment position variable state, and FIG. 8B shows an operation on the sticky note in an attachment position fixed state.

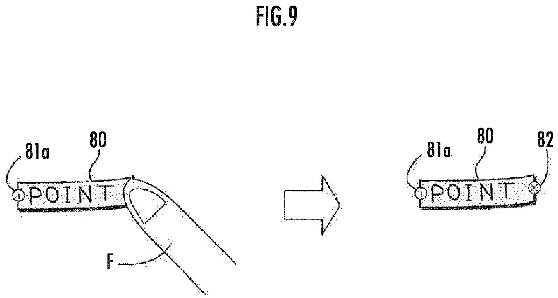

FIG. 9 is a view for explaining an operation of giving an instruction to delete the small-size sticky note.

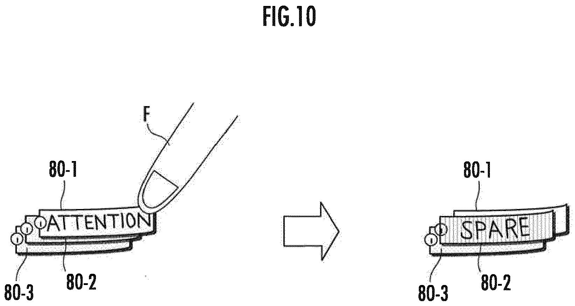

FIG. 10 is a view for explaining a process of changing the stacking order of sticky notes.

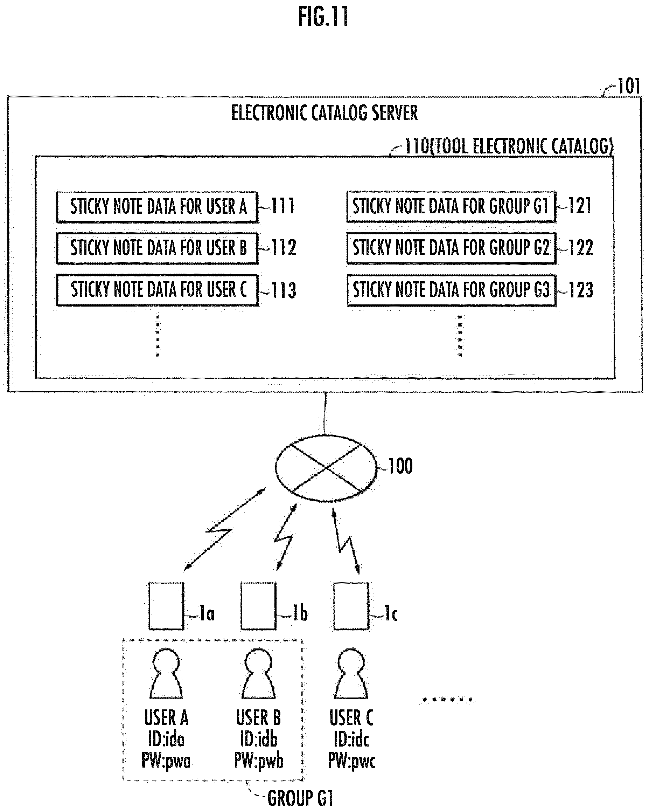

FIG. 11 is a diagram for explaining a configuration which manages pieces of data on sticky notes attached to an electronic book using a server.
FIG.s 12A and 12B are charts for explaining pieces of sticky note data, FIG. 12A shows a piece of sticky note data for a user, and FIG. 12B shows a piece of sticky note data for a group.

### Description of Embodiment

An example of an embodiment of the present invention will be described with reference to FIG.s 1 to 9.

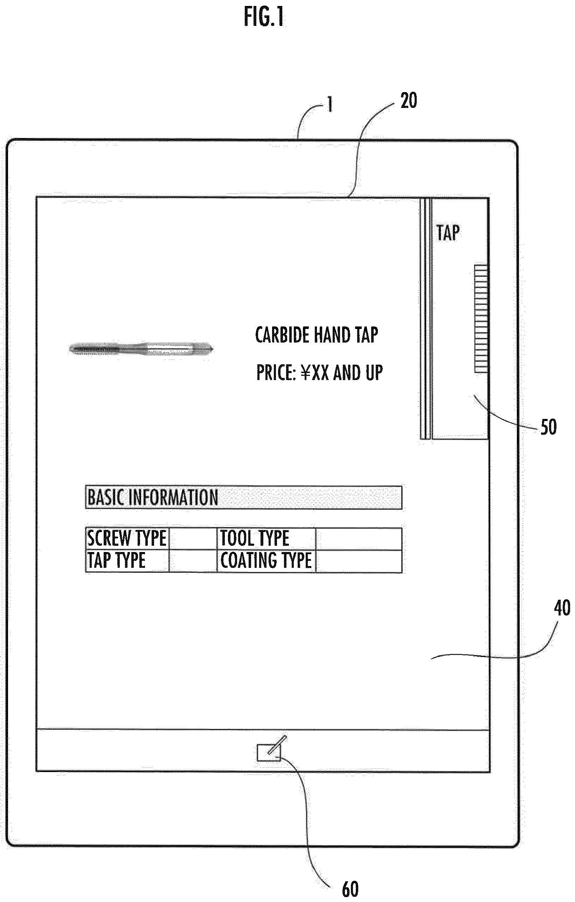

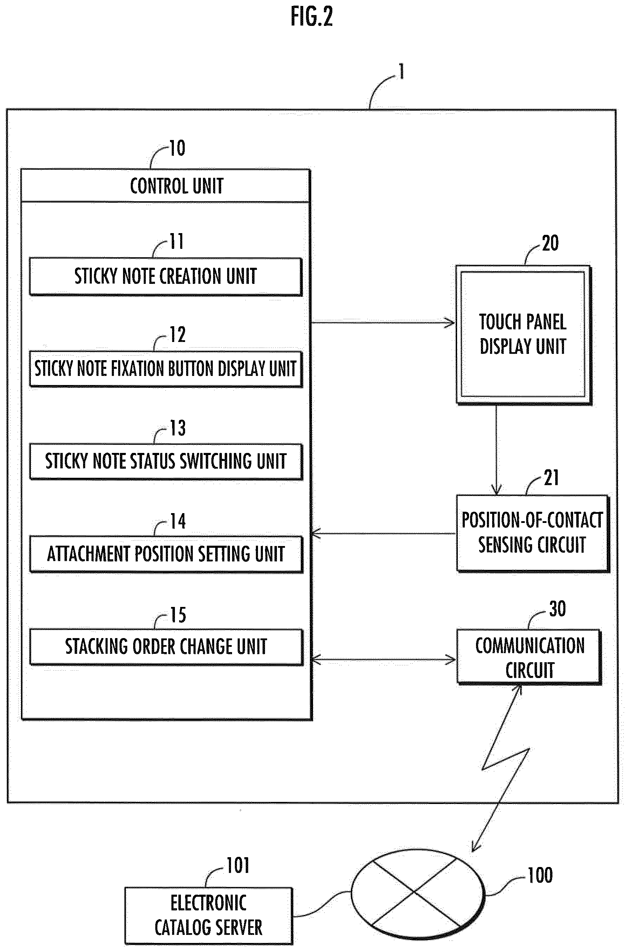

Referring to FIG. 1, a touch panel device 1, in which a browsing assistance method for an electronic book and a browsing assistance program for an electronic book according to the present invention are executed, comprises a touch panel display unit 20 which is arranged on the front of a housing and a control unit 10 (see FIG. 2) which is arranged inside the housing and controls display by the touch panel display unit 20. The touch panel display unit 20 is composed of, for example, a transparent touch panel laid on a surface of a liquid crystal display in an overlapping manner.

FIG. 1 shows a state in which a browsing screen 40 for an electronic catalog of tools (corresponding to an electronic book according to the present invention) is displayed. An index 50 is displayed near an upper right corner (a corner portion) of a page displayed on the browsing screen 40. The index 50 indicates a tool genre, to which the page displayed on the browsing screen 40 belongs. A sticky note creation button 60 for giving an instruction for sticky note creation is displayed below the browsing screen 40.

Electronic books according to the present invention include various genres of books, such as a magazine, a dictionary, a telephone book, and an instruction manual, in addition to an electronic catalog illustrated in the present embodiment.

Referring to FIG. 2, the touch panel device 1 comprises a position-of-contact sensing circuit 21 (corresponding to a position-of-contact sensing unit according to the present invention) which senses the position of a pointer (e.g., a user's finger, or a touch pen) in contact with the touch panel display unit 20 and a communication circuit 30, in addition to the control unit 10 and the touch panel display unit 20.

The control unit 10 is an electronic circuit unit which is composed of a CPU, memory, an interface circuit, and the like (not shown) and functions as a sticky note creation unit 11, a sticky note fixation button display unit 12, a sticky note status switching unit 13, an attachment position setting unit 14, and a stacking order change unit 15 (to be described later) when the browsing assistance program for an electronic book held in the memory is executed by the CPU.

The control unit 10 performs a process of browsing an electronic book in accordance with an operation of touch on the touch panel display unit 20 by the user. In this case, data of the electronic book may be held in the memory or may be downloaded from an electronic catalog server 101 over a communication network 100 by the communication circuit 30.

A process of creating a sticky note and attaching the created sticky note to be executed by the control unit 10 will be described with reference to flowcharts shown in FIG.s 3 and 4.

When an operation of running an electronic book browsing application is performed by the user, the control unit 10 causes the CPU to execute a program (including the browsing assistance program for an electronic book according to the present invention) of the application and displays the browsing screen 40 for an electronic book on the touch panel display unit 20, as shown in FIG. 1. The program of the electronic book browsing application may be held in advance in the memory or may be downloaded from the electronic catalog server 101 or the like.

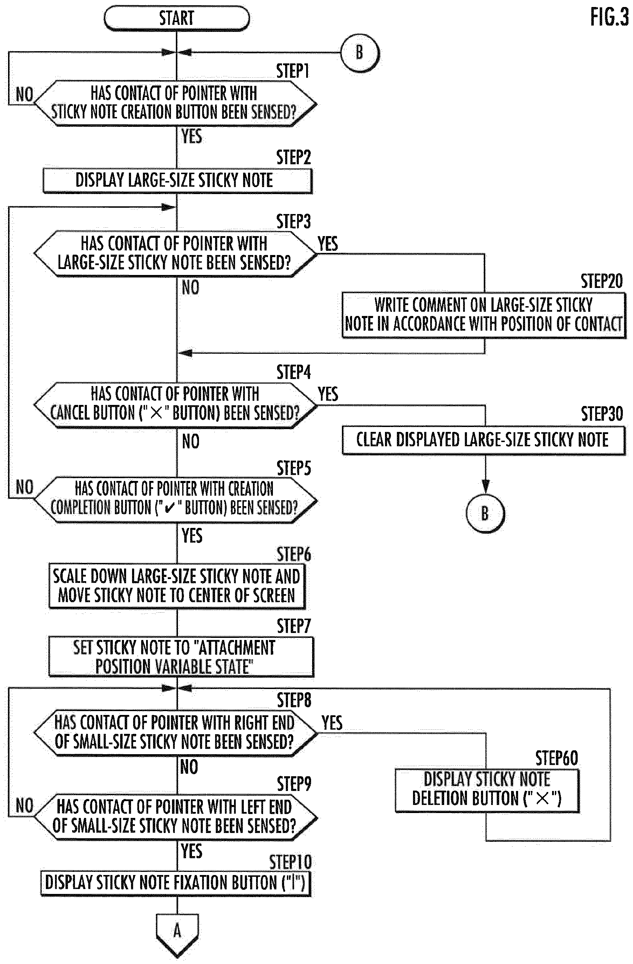

The sticky note creation unit 11 of the control unit 10 executes a process indicated by the flowchart in FIG. 3 to create a sticky note. Note that a sticky note creation process by the sticky note creation unit 11 corresponds to a sticky note creation step in the browsing assistance method for an electronic book according to the present invention.

In STEP 1 of FIG. 3, the sticky note creation unit 11 waits for the position-of-contact sensing circuit 21 to sense contact of a pointer (e.g., a finger of the user, or a touch pen) with the sticky note creation button 60 (see FIG. 1).

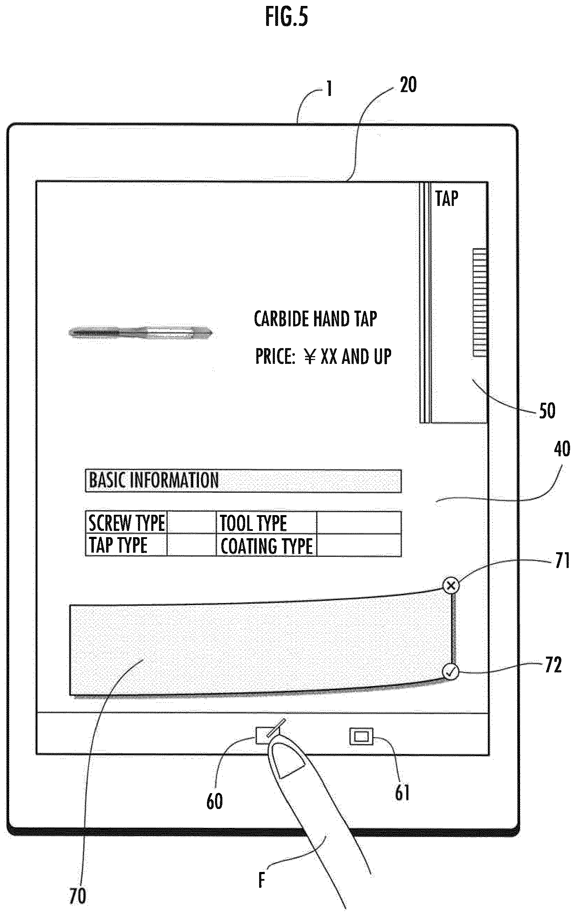

When contact of a pointer F with the sticky note creation button 60 is sensed by the position-of-contact sensing circuit 21 (when the user performs an operation of contact with the sticky note creation button 60), as shown in FIG. 5, the process advances to STEP 2. The sticky note creation unit 11 displays a large-size sticky note 70 (corresponding to a sticky note of first size according to the present invention).

The sticky note creation unit 11 also displays a cancel button (a "x" button) 71 for giving an instruction to cancel sticky note creation at an upper right end of the large-size sticky note 70 and displays a creation completion button (a check button) 72 for giving an instruction to complete sticky note creation at a lower right end of the large-size sticky note 70.

The sticky note creation unit 11 further displays a selection button 61 for selecting whether a sticky note to be created is made available for local use (personal use) or use in a group (shared use) (to be described later).

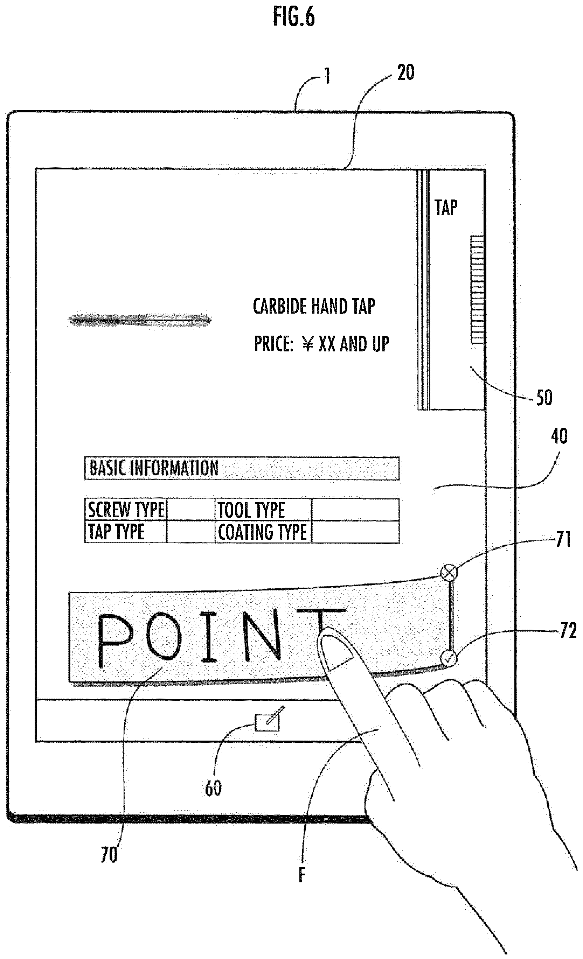

In succeeding STEP 3, the sticky note creation unit 11 judges whether contact of the pointer F with the large-size sticky note 70 has been sensed by the position-of-contact sensing circuit 21. If contact of the pointer F with the large-size sticky note 70 has not been sensed, the process advances to STEP 4. If contact of the pointer F with the large-size sticky note 70 has been sensed, the process branches to STEP 20. As shown in FIG. 6, the sticky note creation unit 11 writes and displays a comment on the large-size sticky note 70 in accordance with a position of contact of the pointer F, and the process advances to STEP 4.

In STEP 4, the sticky note creation unit 11 judges whether contact of the pointer F with the cancel button 71 has been sensed by the position-of-contact sensing circuit 21. If contact of the pointer F with the cancel button 71 has not been sensed, the process advances to STEP 5. If contact of the pointer F with the cancel button 71 has been sensed, the process branches to STEP 30. The sticky note creation unit 11 clears the displayed large-size sticky note 70, and the process returns to STEP 1.

In STEP 5, the sticky note creation unit 11 judges whether contact of the pointer F with the creation completion button 72 (corresponding to contact of a pointer according to the present invention, giving an instruction to complete writing) has been sensed by the position-of-contact sensing circuit 21 (whether the user has performed an operation of contact with the creation completion button 72). If contact of the pointer F with the creation completion button 72 has not been sensed, the process returns to STEP 3.

On the other hand, if contact of the pointer F with the creation completion button 72 has been sensed, the process advances to STEP 6. The sticky note creation unit 11 scales down the large-size sticky note 70 and moves the sticky note 70 to a central portion of the browsing screen 40. The sticky note creation unit 11 displays a small-size sticky note 80 (corresponding to a sticky note of second size according to the present invention) in the central portion of the browsing screen 40. The next STEP 7 is a process by the sticky note status switching unit 13. The sticky note status switching unit 13 sets the small-size sticky note 80 to an "attachment position variable state" in which an attachment position (a position for fixed display) is changeable.

During a judgment loop in succeeding STEP 8 and STEP 9, the control unit 10 judges in STEP 8 whether contact of the pointer F with a right end of the small-size sticky note 80 has been sensed and judges in STEP 9 whether contact of the pointer F with a left end of the small-size sticky note 80 has been sensed.

If contact of the pointer F with the right end portion of the small-size sticky note 80 has been sensed by the position-of-contact sensing circuit 21 in STEP 8, as shown in FIG. 9, the process branches to STEP 60. The control unit 10 displays a sticky note deletion button 82 at the right end portion of the small-size sticky note 80. If contact of the pointer F with the sticky note deletion button 82 has been sensed by the position-of-contact sensing circuit 21, the control unit 10 clears the displayed small-size sticky note.

Note that, if a state in which the pointer F is out of contact with the sticky note deletion button 82 (a state without an operation on the sticky note deletion button 82 by the user) continues for a fixed period of time after display of the sticky note deletion button 82, the control unit 10 clears the sticky note deletion button 82.

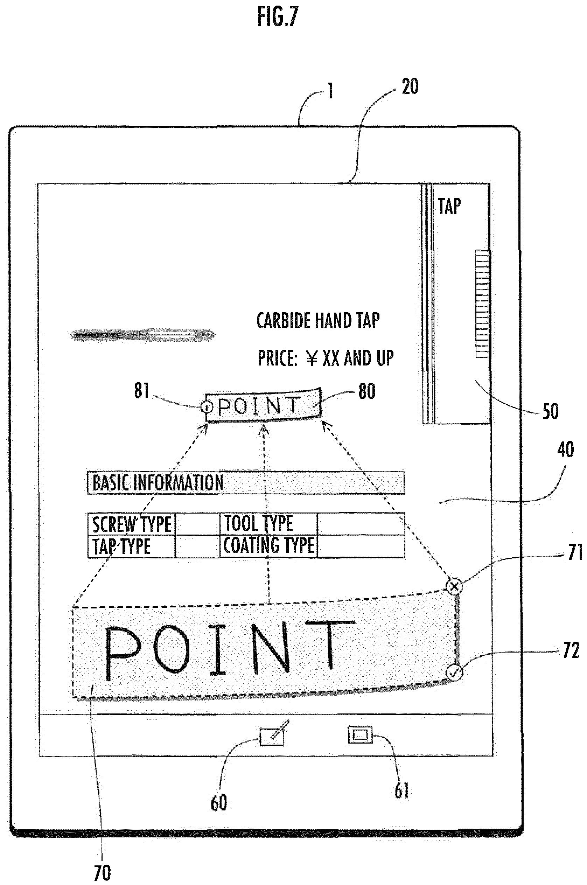

If contact of the pointer F with the left end of the small-size sticky note 80 has been sensed by the position-of-contact sensing circuit 21 in STEP 9, the process advances to STEP 10. STEP 10 is a process by the sticky note fixation button display unit 12. The sticky note fixation button display unit 12 displays a sticky note fixation button 81 at the left end portion of the small-size sticky note 80, as shown in FIG. 7.

Note that, if a state in which the pointer F is out of contact with the sticky note fixation button 81 (a state without an operation on the sticky note fixation button 81 by the user) continues for a fixed period of time, the sticky note fixation button display unit 12 clears the sticky note fixation button 81.

The sticky note fixation button 81 is a button for switching the small-size sticky note 80 between the "attachment position variable state", in which the attachment position (the position for fixed display) is changeable, and an "attachment position fixed state" in which the attachment position is unchangeable.

The sticky note fixation button display unit 12 causes the sticky note fixation button 81 to bear a "|" sign when the small-size sticky note 80 is in the "attachment position variable state". The sticky note fixation button display unit 12 also causes the sticky note fixation button 81 to bear a "|" sign when the small-size sticky note 80 is in the "attachment position fixed state".

Note that the process of displaying the sticky note fixation button 81 on the touch panel display unit 20 by the sticky note fixation button display unit 12 corresponds to a sticky note fixation button display step in the browsing assistance method for an electronic book according to the present invention.

The next STEP 11 is a process by the sticky note status switching unit 13. The sticky note status switching unit 13 initializes the small-size sticky note 80 to the "attachment position variable state". The sticky note fixation button display unit 12 causes the sticky note fixation button 81 to bear the "|" sign in accordance with the initialization.

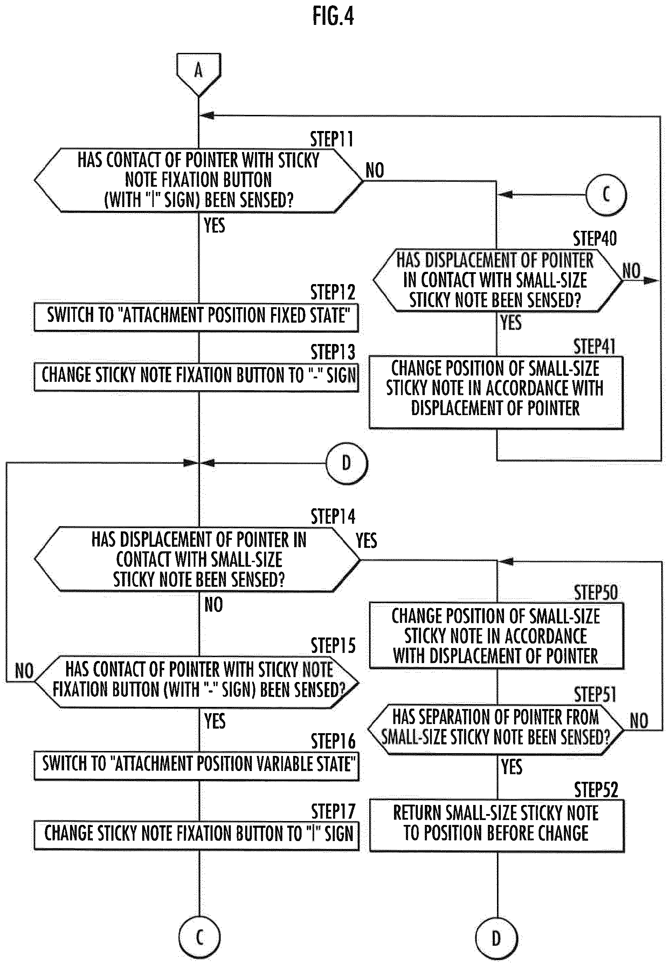

The succeeding STEP 11 and STEP 12 in FIG. 4 are processes by the sticky note status switching unit 13. The sticky note status switching unit 13 judges in STEP 11 whether contact of the pointer F with the sticky note fixation button 81 (in a state bearing the "|" sign) has been sensed by the position-of-contact sensing circuit 21 (the user has performed an operation of contact with the sticky note fixation button 81).

If contact of the pointer F with the sticky note fixation button 81 (in the state bearing the "|" sign) has been sensed, the process advances to STEP 12. The sticky note status switching unit 13 switches the small-size sticky note 80 to the "attachment position fixed state". In the succeeding STEP 13, the sticky note fixation button display unit 12 switches the sticky note fixation button 81 such that the sticky note fixation button 81 bears the "-" sign.

On the other hand, if contact of the pointer F with the sticky note fixation button 81 (in the state bearing the "|" sign) has not been sensed, the process branches to STEP 40.

Note that the process of switching the small-size sticky note 80 between the "attachment position variable state" and the "attachment position fixed state" by the sticky note status switching unit 13 corresponds to a sticky note status switching step in the browsing assistance method for an electronic book according to the present invention.

STEP 40 and STEP 41 are processes by the attachment position setting unit 14. If a displacement of the pointer F in contact with the small-size sticky note 80 has been sensed by the position-of-contact sensing circuit 21 (if the user has performed a slide operation with the pointer F in contact with the small-size sticky note 80) in STEP 40, the attachment position setting unit 14 advances to STEP 41. As shown in FIG. 8A, the attachment position setting unit 14 changes the attachment position of the small-size sticky note 80 in accordance with the displacement of the pointer F, and the process returns to STEP 11.

In this case, the user can arbitrarily change the attachment position of the small-size sticky note 80, as in the case of reattachment of a sticky note at the time of paper book browsing. Note that the sticky note fixation button 81 in the state bearing the "|" sign is denoted by reference character 81 a in FIG. 8A. If a displacement of the pointer F in contact with the small-size sticky note 80 has not been sensed in STEP 40, the process returns to STEP 11.

STEP 14 and STEP 50 to STEP 52 that are branches of STEP 14 are processes by the attachment position setting unit 14. If a displacement of the pointer F in contact with the small-size sticky note 80 has been sensed by the position-of-contact sensing circuit 21 (if the user has performed a slide operation with the pointer F in contact with the small-size sticky note 80) in STEP 14, the attachment position setting unit 14 advances to STEP 50.

As shown on the left side of FIG. 8B, the attachment position setting unit 14 changes the position of the small-size sticky note 80 in accordance with the displacement of the pointer F in STEP 50. The attachment position setting unit 14, however, keeps the attachment position of the small-size sticky note 80 fixed without change. Note that the sticky note fixation button 81 in the state bearing the "-" sign is denoted by reference character 81b in FIG. 8B.

That is, if separation of the pointer F from the small-size sticky note 80 has been sensed by the position-of-contact sensing circuit 21 in the succeeding STEP 51, the process advances to STEP 52. The attachment position setting unit 14 returns the small-size sticky note 80 to a position before the change, as shown on the right side of FIG. 8B. The process advances to STEP 14.

As described above, the position of the small-size sticky note 80 in the "attachment position fixed state" can be temporarily changed. This allows the user to check a description hidden behind the small-size sticky note 80 by shifting the small-size sticky note 80.

On the other hand, if a displacement of the pointer F in contact with the small-size sticky note 80 has not been sensed in STEP 14, the process advances to STEP 15. STEP 15 and STEP 16 are processes by the sticky note status switching unit 13.

The sticky note status switching unit 13 judges in STEP 15 whether contact of the pointer F with the sticky note fixation button 81b has been sensed by the position-of-contact sensing circuit 21. The process advances to STEP 16 if contact of the pointer F with the sticky note fixation button 81b has been sensed and returns to STEP 14 if contact of the pointer F with the sticky note fixation button 81b has not been sensed.

In STEP 16, the sticky note status switching unit 13 switches the small-size sticky note 80 to the "attachment position fixed state". In succeeding STEP 17, the sticky note fixation button display unit 12 changes the sticky note fixation button 81 such that the sticky note fixation button 81 bears the "|" sign, and the process returns to STEP 40.

Note that the process of changing and fixing the attachment position of the small-size sticky note 80 by the attachment position setting unit 14 corresponds to an attachment position setting step in the browsing assistance method for an electronic book according to the present invention.

The sticky note creation unit 11 creates a plurality of small-size sticky notes 80 by repeating the processes in STEP 1 to STEP 6 and STEP 20 shown in FIG. 3. In this case, the colors of the plurality of small-size sticky notes 80 to be created may be set to be different from each other. The sticky note fixation button display unit 12, the sticky note status switching unit 13, and the attachment position setting unit 14 display the sticky note fixation button 81 for each small-size sticky note 80 and switch the small-size sticky note 80 between the "attachment position variable state" and the "attachment position fixed state".

In the present embodiment, the sticky note fixation button display unit 12 causes the sticky note fixation button 81 to bear the "|" sign when the small-size sticky note 80 is in the "attachment position variable state" and causes the sticky note fixation button 81 to bear the "-" sign when the small-size sticky note 80 is in the "attachment position fixed state". Even when the above-described process of making a display mode of the sticky note fixation button 81 in the "attachment position variable state" and that of the sticky note fixation button 81 in the "attachment position fixed state" different is not performed, effects of the present invention can be achieved.

In the present embodiment, the process of temporarily changing the position of the small-size sticky note 80 in accordance with a displacement of the pointer F in contact with the small-size sticky note 80 when the small-size sticky note 80 is in the "attachment position fixed state" is performed. Even when the process is not performed, effects of the present invention can also be achieved.

A stacking order change process by the stacking order change unit 15 will be described with reference to FIG. 10. The sticky note creation unit 11 displays a new sticky note on the browsing screen 40 every time the above-described sticky note creation operation is performed. The attachment position of each sticky note is changed in accordance with a movement operation by the user.

For this reason, a plurality of sticky notes 80-1, 80-2, and 80-3 may be displayed on top of each other, as shown on the left side of FIG. 10. In this case, the user cannot visually recognize characters or the like written on the sticky notes 80-2 and 80-3 behind.

When contact of the pointer F with the sticky note 80-1 displayed at the front and separation of the pointer F from the sticky note 80-1 without slide are sensed by the position-of-contact sensing circuit 21, the stacking order change unit 15 performs a process of displaying, at the back, the sticky note 80-1 displayed at the front and displaying, at the front, the sticky note 80-2 displayed next behind the front (the stacking order change process), as shown on the right side of FIG. 10.

By performing the stacking order change process as described above, matters written on the sticky note 80-2, visual recognition of which is impossible in the state on the left side of FIG. 10, can be visually recognized in the state on the right side of FIG. 10.

Note that, if the user slides the pointer F in contact with the sticky note 80-1 displayed at the front while the pointer F is in contact with the sticky note 80-1, the operation changes a display position of the sticky note 80-1.

Management of pieces of sticky note data by the server (electronic catalog server) 101 will be described with reference to FIG.s 11 and 12.

FIG. 11 shows an aspect in which users (users A, B, C, ...) use their touch panel devices 1a, 1b, 1c, ... to access an electronic catalog website over the communication network 100 by entering IDs and PWs (passwords) and download data of an electronic catalog from the server 101 to browse the electronic catalog.

The server 101 sucks up pieces of information on sticky notes attached during browsing by the users and holds pieces of sticky note data 111, 112, 113, ... for the respective users and pieces of sticky note data 121, 122, 123, ... for respective groups in a storage device. A group here is set when a specific electronic book is jointly used by a plurality of users. In the example in FIG. 11, the user A and the user B belong to a group G1.

As shown in FIG. 12A, the piece of data for each user is configured to hold pieces of data (sticky note No., color, entry, attachment position, whether fixed or unfixed, ordinal position, and size) on each sticky note attached for each page (page 1 is given as an example in FIG. 12A) of the electronic book.

Here, whether fixed or unfixed corresponds to the "attachment position fixed state" and the "attachment position variable state" shown in FIG.s 8B and 8A. The ordinal position indicates an ordinal position from the front in the case shown in FIG. 10 where a plurality of sticky notes are stacked. The size is provided to support a case where the size of a sticky note is changeable. For example, any of three sizes, a large size, a medium size, and a small size, is assigned.

Like the pieces of data for the respective users, the piece of data for each group is also configured to hold pieces of data on each sticky note attached for each page of the electronic book, as shown in FIG. 12B. A user can switch a sticky note to be attached between local (displayed when the user browses) and group (displayed when one belonging to a group browses) by touching the selection button 61 shown in FIG. 5, at the time of sticky note creation.

For example, when the user A is browsing the first page of the electronic book, pieces of data for displaying sticky notes, pieces of data on which are held for the first page in the piece of sticky note data 111 for the user A, and sticky notes, pieces of data on which are held for the first page in the piece of sticky note data 121 for the group G 1, to which the user A belongs, are downloaded from the server 101 to the touch panel device 1a and displayed on a browsing screen.

Note that, in the present embodiment, a user's finger is named as a pointer, with which an operation of contact with the touch panel display unit 20 is to be performed, and that a touch pen or the like may be used as a pointer.

### Reference Signs List

- 1: Touch panel device
- 10: Control unit
- 11: Sticky note creation unit
- 12: Sticky note fixation button display unit
- 13: Sticky note status switching unit
- 14: Attachment position setting unit
- 15: Stacking order change unit
- 20: Touch panel display unit
- 21: Position-of-contact sensing circuit
- 30: Communication circuit
- 40: Browsing screen
- 50: Index
- 60: Sticky note creation button
- 70: Large-size sticky note
- 71: Cancel button
- 72: Creation completion button
- 80: Small-size sticky note
- 81: Sticky note fixation button
- 82: Sticky note deletion button
- F: User's finger (pointer)

## Claims

1. A browsing assistance method for an electronic book using a touch panel device comprising a touch panel display unit, a position-of-contact sensing unit which senses a position of contact of a pointer with the touch panel display unit, and a control unit which changes a display on the touch panel display unit in accordance with the position of contact of the pointer sensed by the position-of-contact sensing unit, comprising:
a sticky note creation step of causing the control unit to display a sticky note on the touch panel display unit when contact of the pointer with the touch panel display unit, giving an instruction for sticky note creation, is sensed by the position-of-contact sensing unit in a state in which an electronic book browsing screen is displayed on the touch panel display unit;
a sticky note fixation button display step of causing the control unit to display on the touch panel display unit a sticky note fixation button for switching the sticky note between an attachment position fixed state in which an attachment position is unchangeable and an attachment position variable state in which the attachment position is changeable, when the sticky note is displayed on the touch panel display unit;
a sticky note status switching step of causing the control unit to switch the sticky note to the attachment position variable state when contact of the pointer with the sticky note fixation button is sensed by the position-of-contact sensing unit when the sticky note is in the attachment position fixed state, and switching the sticky note to the attachment position fixed state when contact of the pointer with the sticky note fixation button is sensed when the sticky note is in the attachment position variable state; and
an attachment position setting step of causing the control unit to change the attachment position of the sticky note in accordance with a displacement of the pointer in contact with the sticky note when the sticky note is in the attachment position variable state, and fixing the attachment position of the sticky note without change when the sticky note is in the attachment position fixed state, when the displacement is sensed by the position-of-contact sensing unit.

2. A browsing assistance program for an electronic book, in a touch panel device comprising a touch panel display unit, a position-of-contact sensing unit which senses a position of contact of a pointer with the touch panel display unit, and a control unit which changes a display on the touch panel display unit in accordance with the position of contact of the pointer sensed by the position-of-contact sensing unit, the browsing assistance program being executed by the control unit,
wherein the program causes the control unit to function as
a sticky note creation unit which displays a sticky note on the touch panel display unit when contact of the pointer with the touch panel display unit, giving an instruction for sticky note creation, is sensed by the position-of-contact sensing unit in a state an electronic book browsing screen is displayed on the touch panel display unit,
a sticky note fixation button display unit which displays on the touch panel display unit a sticky note fixation button for switching the sticky note between an attachment position fixed state in which an attachment position is unchangeable and an attachment position variable state in which the attachment position is changeable, when the sticky note is displayed on the touch panel display unit,
a sticky note status switching unit which switches the sticky note to the attachment position variable state when contact of the pointer with the sticky note fixation button is sensed by the position-of-contact sensing unit when the sticky note is in the attachment position fixed state, and switches the sticky note to the attachment position fixed state when contact of the pointer with the sticky note fixation button is sensed when the sticky note is in the attachment position variable state, and
an attachment position setting unit which changes the attachment position of the sticky note in accordance with a displacement of the pointer in contact with the sticky note when the sticky note is in the attachment position variable state and fixes the attachment position of the sticky note fixed without change when the sticky note is in the attachment position fixed state, when the displacement is sensed by the position-of-contact sensing unit.

3. The browsing assistance program for an electronic book according to claim 2, wherein
when the sticky note is in the attachment position fixed state when a displacement of the pointer in contact with the sticky note is sensed by the position-of-contact sensing unit, the attachment position setting unit fixes the attachment position of the sticky note by changing a position of the sticky note in accordance with the displacement, and thereafter returning the sticky note to the position before the change when separation of the pointer from the sticky note is sensed by the position-of-contact sensing unit after the change.

4. The browsing assistance program for an electronic book according to claim 2, wherein
the sticky note fixation button display unit makes a display of the sticky note fixation button when the sticky note is in the attachment position fixed state in a manner different from a display of the sticky note fixation button when the sticky note is in the attachment position variable state.

5. The browsing assistance program for an electronic book according to claim 2, wherein
the sticky note creation unit displays a sticky note of a first size when the contact of the pointer, giving the instruction for sticky note creation, is sensed by the position-of-contact sensing unit, performs a process of writing a comment on the sticky note of the first size in accordance with contact of the pointer with the sticky note of the first size, and scales down the sticky note of the first size to a second size when contact of the pointer, giving an instruction for writing completion, is sensed by the position-of-contact sensing unit,
the sticky note status switching unit switches the sticky note of the second size between the attachment position fixed state and the attachment position variable state, and
the attachment position setting unit performs a process of changing the attachment position and fixing the attachment position of the sticky note of the second size as a target.

6. The browsing assistance program for an electronic book according to claim 2, wherein
the sticky note creation unit displays a new sticky note on the touch panel display unit every time the contact of the pointer, giving the instruction for sticky note creation, is sensed by the position-of-contact sensing unit, and
the control unit comprises a stacking order change unit which, when contact of the pointer with a sticky note displayed at a forefront among a plurality of sticky notes displayed on top of each other on the touch panel display unit is sensed by the position-of-contact sensing unit, performs a stacking order change process of displaying, at a rearmost, the sticky note displayed at the forefront and displaying, at the forefront, a sticky note displayed next behind the forefront among the plurality of sticky notes.
